# EUROPÄISCHE PATENTANMELDUNG

(11) **EP 1 522 876 A2**
(43) Veröffentlichungstag der Anmeldung: **13.04.2005**
(21) Anmeldenummer: 04023736.4
(22) Anmeldetag: 06.10.2004
(51) Int. Cl.: G01S 17/02

(54) **Optischer Sensor**

(30) Priorität: 07.10.2003 DE 20315358 U
(71) Anmelder: Leuze electronic GmbH + Co KG, 73277 Owen/Teck (DE)
(72) Erfinder: Schönhaar, Jürgen, 72669 Unterensingen (DE)
(74) Vertreter: Ruckh, Rainer Gerhard, Dr.

(57) **Zusammenfassung**

Die Erfindung betrifft einen optischen Sensor zur Erfassung von Objekten in einem Überwachungsbereich mit einem Sendelichtstrahlen emittierenden Sender, einem Empfangslichtstrahlen empfangenden Empfänger und einer Auswerteeinheit, in welcher die am Ausgang des Empfängers anstehenden Empfangssignale zur Generierung eines Objektfeststellungssignals ausgewertet werden, dadurch gekennzeichnet, dass die Auswerteeinheit (10) einen Ethemet-Controller aufweist, welcher an eine Ethemet-Schnittstelle angeschlossen ist.

## Beschreibung

Die Erfindung betrifft einen optischen Sensor gemäß dem Oberbegriff des Anspruchs 1.

Derartige optische Sensoren weisen jeweils wenigstens einen Sendelichtstrahlen emittierenden Sender und einen Empfangslichtstrahlen empfangenden Empfänger zur Erfassung von Objekten in einem Überwachungsbereich auf. Die Auswertung der an dem Empfänger anstehenden Empfangssignale erfolgt in einer Auswerteeinheit. In dieser Auswerteeinheit wird aus den Empfangssignalen ein Objektfeststellungssignal abgeleitet.

Das Objektfeststellungssignal kann insbesondere als binäres Schaltsignal ausgebildet sein. Das aus den Empfangssignalen abgeleitete Schaltsignal weist zwei Schaltzustände auf. Dabei nimmt das Schaltsignal einen ersten Schaltzustand an, wenn sich ein Objekt im Überwachungsbereich befindet und einen zweiten Schaltzustand ein, wenn sich kein Objekt im Überwachungsbereich befindet. Der optische Sensor bildet dann ein binäres Schaltgerät, mittels dessen eine Anwesenheitskontrolle von Objekten im Überwachungsbereich erfolgt. Derartige optische Sensoren sind beispielsweise von Lichtschranken, Lichttastern oder Reflexionslichtschranken gebildet. Das binäre Schaltsignal wird über einen Schaltausgang ausgegeben. Hierzu weist der optische Sensor typischerweise einen Steckverbinder auf, über welchen eine Anschlußleitung zur Ausgabe des Schaltsignals geführt ist. Weiterhin sind über den Steckverbinder Versorgungsleitungen geführt, über welche die Spannungsversorgung des optischen Sensors erfolgt.

In einer alternativen Ausgestaltung kann in dem optischen Sensor auch ein analoges Objektfeststellungssignal generiert werden. In diesem Fall ist der optische Sensor beispielsweise als Distanzsensor ausgebildet. Dann sind die analogen Objektfeststellungssignale von Distanzwerten gebildet, welche die aktuelle Distanz eines Objekts zum optischen Sensor angeben. In diesem Fall weist der optische Sensor eine analoge Schnittstelle zur Ausgabe des Objektfeststellungssignals auf, wobei diese typischerweise Signale im Bereich 1 - 10 V oder 4 - 20 mA ausgibt. Alternativ erfolgt die Messwertausgabe über eine RS 232-Schnittstelle oder eine RS 485-Schnittstelle. Diese Schnittstelle ist zweckmäßigerweise wiederum in einem Steckverbinder integriert, welche zusätzliche Anschlüsse für die Versorgungsleitungen aufweist, über welche die Versorgungsspannung in den optischen Sensor eingespeist wird.

Der Erfindung liegt die Aufgabe zugrunde einen optischen Sensor der eingangs genannten Art bereitzustellen, welcher möglichst ohne zusätzlichen konstruktiven Aufwand eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist einen Sendelichtstrahlen emittierenden Sender, einen Empfangslichtstrahlen empfangenden Empfänger und eine Auswerteeinheit auf. In der Auswerteeinheit werden die am Ausgang des Empfängers anstehenden Empfangssignale zur Generierung eines Objektfeststellungssignals ausgewertet. Die Auswerteeinheit weist einen Ethernet-Controller auf, welcher an eine Ethernet-Schnittstelle angeschlossen ist.

Durch die integrierte Ethernet-Anbindung des optischen Sensors wird dessen Funktionalität erheblich erweitert, da damit der erfindungsgemäße optische Sensor in industrielle Ethernet-Umgebungen integriert werden kann. Über die Ethernet-Schnittstelle können hohe Datenmengen in den optischen Sensor eingelesen beziehungsweise aus diesem ausgelesen werden. Bei Fast-Ethemet-Anbindungen betragen die Datenmengen typischerweise 10 oder 100 Mbit.

Durch diese hohen Übertragungsraten wird insbesondere eine umfangreiche Diagnose und Parametrisierung des optischen Sensors ermöglicht. Dies kann vorteilhaft über externe Rechnereinheiten oder Steuereinheiten erfolgen, die über die Ethernet-Schnittstelle an den optischen Sensor angeschlossen werden. Die hierfür erforderliche Verarbeitung von Daten erfolgt im Ethemet-Controller, welcher bevorzugt in einem Microcontroller integriert ist. Dabei übernimmt der Microcontroller vorzugsweise auch die Steuerung sämtlicher Sensorfunktionen, welche zur Objekterfassung dienen. Die Auswerteeinheit besteht dann allein aus dem Microcontroller mit integriertem Ethemet-Controller, wodurch ein besonders einfacher und kostengünstiger Aufbau des optischen Sensors erreicht wird. Die Ausgabe der Objektfeststellungssignale erfolgt unabhängig davon, ob diese als binäre Schaltsignale oder als Analogsignale ausgebildet sind, über die Ethernet-Schnittstelle.

Der erfindungsgemäße optische Sensor weist somit hinsichtlich der Ethemet-Komponenten für unterschiedliche Ausführungsformen des optischen Sensors den selben Aufbau auf. Dabei kann der optische Sensor insbesondere als binäres Schaltgerät ausgebildet sein, zum Beispiel als Lichtschranke, Lichttaster oder Reflexionslichtschranke, bei welchem ein binäres Schaltsignal als Objektfeststellungssignal über die Ethernet-Schnittstelle ausgegeben wird. Ebenso kann der optische Sensor als Distanzsensor ausgebildet sein, bei welchem Distanzwerte als analoge Objektfeststellungssignale über die Ethernet-Schnittstelle ausgegeben werden.

Die Ethernet-Schnittstelle ist bevorzugt in einem Steckverbinder integriert. Dieser Steckverbinder entspricht den bei optischen Sensoren üblichen Anschlußmitteln. Damit wird ohne nennenswerten konstruktiven Mehraufwand eine Integration der Ethernet-Komponenten im optischen Sensor erreicht.

In einer ersten Ausführungsform können über den Steckverbinder separate Versorgungsleitungen zur Einspeisung der Versorgungsspannung und Datenleitungen zur Ethernet-Anbindung zum optischen Sensor geführt sein. Zweckmäßigerweise ist dann ein 6-poliger Steckverbinder vorgesehen, wobei zwei Anschlüsse für die Versorgungsleitungen und vier Anschlüsse für die Datenleitungen vorgesehen sind.

In einer weiteren, vorteilhaften Ausführungsform weist der optische Sensor einen 4-poligen Steckverbinder zum Anschluß von vier Datenleitungen auf. In diesem Fall erfolgt die Einspeisung der Versorgungsspannung in den optischen Sensor über zumindest einen Teil der Datenleitungen. Da in diesem Fall separate Versorgungsleitungen entfallen können, weist der so ausgebildete optische Sensor einen besonders einfachen und kompakten Aufbau auf.

Die Erfindung wird im Nachstehenden anhand der Zeichnungen erläutert. Es zeigen:
- Figur 1:: Schematische Darstellung eines als Reflexionslichtschranke ausgebildeten optischen Sensors.
- Figur 2:: Schematische Darstellung eines als Distanzsensor ausgebildeten optischen Sensors.
- Figur 3a, b:: Unterschiedliche Ausführungsformen eines Steckverbinders für die optischen Sensoren gemäß den Figuren 1 und 2.

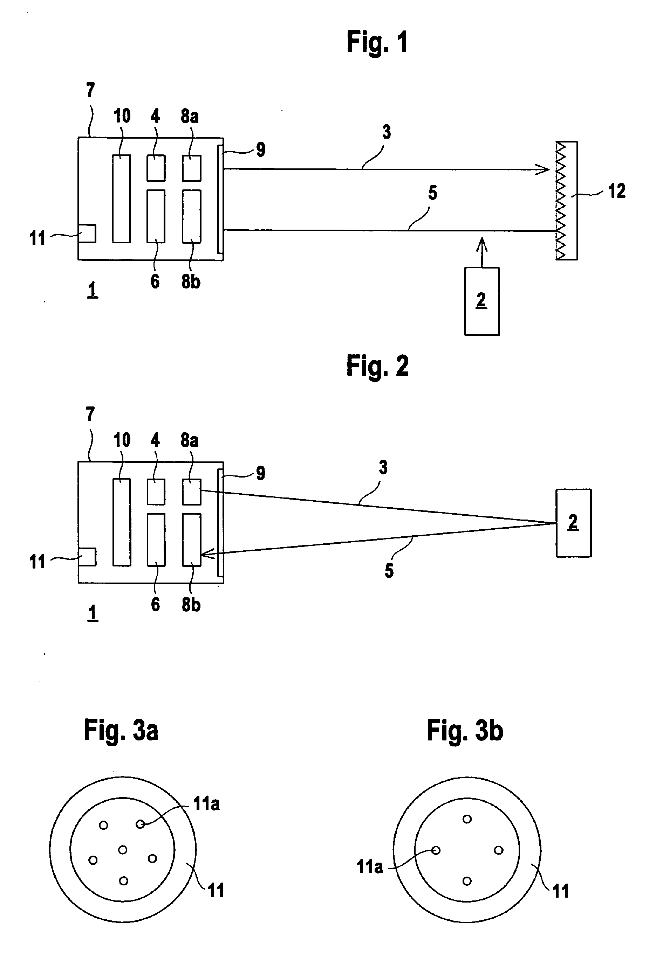

Figur 1 zeigt eine erste Ausführungsform eines optischen Sensors 1 zur Erfassung von Objekten 2 in einem Überwachungsbereich. Der optische Sensor 1 ist in diesem Fall als Reflexionslichtschranke ausgebildet, welche ein binäres Schaltgerät bildet. Weitere Ausführungsformen derartiger optischer Sensoren 1 sind Lichtschranken oder Lichttaster. Der optische Sensor 1 weist einen Sendelichtstrahlen 3 emittierenden Sender 4 und einen Empfangslichtstrahlen 5 empfangenden Empfänger 6 auf, die in einem gemeinsamen Gehäuse 7 integriert sind. Der Sender 4 besteht aus einer Leuchtdiode, der Empfänger 6 ist von einer Photodiode gebildet. Zur Strahlformung der Sendelichtstrahlen 3 ist dem Sender 4 eine Sendeoptik 8a nachgeordnet. Zur Fokussierung der Empfangslichtstrahlen 5 auf den Empfänger 6 ist diesem eine Empfangsoptik 8b vorgeordnet. Die Sendelichtstrahlen 3 werden über ein Austrittsfenster 9 in der Frontwand des Gehäuses 7 in den Überwachungsbereich geführt. Über dasselbe Austrittsfenster 9 werden die Empfangslichtstrahlen 5 aus dem Überwachungsbereich in das Innere des Gehäuses 7 geführt.

Der Sender 4 und der Empfänger 6 sind an eine Auswerteeinheit 10 angeschlossen. Die Auswerteeinheit 10 übernimmt die Ansteuerung des Senders 4. Weiterhin erfolgt in der Auswerteeinheit 10 die Auswertung der am Ausgang des Empfängers 6 anstehenden Empfangssignale. Dabei wird in Abhängigkeit der Empfangssignale ein Objektfeststellungssignal generiert. Das Objektfeststellungssignal wird über einen ein Anschlußmittel bildenden Steckverbinder 11 ausgegeben, welcher in einer Gehäusewand integriert ist.

Der im Gehäuse 7 integrierte optische Sensor 1 ist an einem ersten Rand des Überwachungsbereichs angeordnet. Am gegenüberliegenden Rand des Überwachungsbereichs befindet sich ein Reflektor 12. Bei freiem Strahlengang gelangen die vom Sender 4 emittierten Sendelichtstrahlen 3 ungehindert zum Reflektor 12. Dort werden die Sendelichtstrahlen 3 gerichtet reflektiert und gelangen dann als Empfangslichtstrahlen 5 zum Empfänger 6. Bei Eintritt eines Objektes 2 in den Überwachungsbereich werden die Sendelichtstrahlen 3 an diesem Objekt 2 diffus zurückreflektiert, so dass diese nicht mehr auf den Reflektor 12 treffen.

Zur Generierung des Objektfeststellungssignals werden die Empfangssignale in der Auswerteeinheit 10 mit einem Schwellwert bewertet. Je nachdem, ob der Pegel der Empfangssignale oberhalb oder unterhalb des Schwellwerts liegt, liegt ein freier Strahlengang oder ein Objekteingriff im Überwachungsbereich vor. Somit wird mittels des Schwellwerts ein als binäres Schaltsignal ausgebildetes Objektfeststellungssignal generiert, dessen Schaltzustände angeben, ob sich ein Objekt 2 im Überwachungsbereich befindet oder nicht.

Figur 2 zeigt eine zweite Ausführungsform des optischen Sensors 1. In diesem Fall ist der optische Sensor 1 als Distanzsensor ausgebildet. Der optische Sensor 1 weist analog zu dem optischen Sensor 1 gemäß Figur 1 ein Gehäuse 7 mit einem Austrittsfenster 9 auf, wobei in dem Gehäuse 7 ein Sendelichtstrahlen 3 emittierender Sender 4, ein Empfangslichtstrahlen 5 empfangender Empfänger 6, eine Auswerteeinheit 10 sowie ein Steckverbinder 11 integriert sind. Der Sender 4 besteht aus einer Leuchtdiode oder einer Laserdiode. Der Empfänger 6 ist im vorliegenden Fall von einem ortsauflösenden Detektor wie zum Beispiel einem PSD-Element oder einer CMOS-Zeile oder einer CCD-Zeile gebildet. Die Distanzmessung erfolgt im vorliegenden Fall nach dem Triangulationsprinzip. Alternativ kann bei dem optischen Sensor 1 auch die Distanzmessung nach dem Laufzeitverfahren beziehungsweise Phasenmessverfahren erfolgen. Als Objektfeststellungssignal werden in diesem Fall analoge Distanzmesswerte ausgegeben, welche die Distanz eines Objektes 2 zum optischen Sensor 1 angeben.

Die Auswerteeinheit 10 der optischen Sensoren 1 gemäß den Figuren 1 und 2 besteht aus einem Microcontroller mit integriertem Ethernet-Controller. Der Steckverbinder 11 bildet eine Ethernet-Schnittstelle, mittels derer der optische Sensor 1 an eine Ethernet-Umgebung angekoppelt werden kann. Im vorliegenden Ausführungsbeispiel weist der optische Sensor 1 einen M12-Steckverbinder mit integrierter Ethernet-Schnittstelle auf.

Der Microcontroller übernimmt die Ansteuerung des Senders 4 sowie die Auswertung der Empfangssignale. Auch alle übrigen Sensorfunktionen werden vom Microcontroller übernommen. Hierzu gehören gegebenenfalls die Durchführung von Überwachungsfunktionen, wie zum Beispiel einer Verschmutzungskontrolle optischer Sensorkomponenten sowie gegebenenfalls die Ausgabe von Stör- und Warnmeldungen.

Weiterhin kann der optische Sensor 1 über die Ethernet-Schnittstelle an eine nicht dargestellte Rechnereinheit oder Steuereinheit angeschlossen werden. Über diese externen Einheiten kann eine Diagnose und/oder Parametrisierung des optischen Sensors 1 durchgeführt werden. Durch die hohen Datenübertragungsraten der Ethernet-Schnittstelle können auch komplexe Diagnose- und Parametrisierungsfunktionen realisiert werden.

Die Diagnose des optischen Sensors 1 umfasst prinzipiell dessen gesamte Sensorfunktionen. Als Parameterwerte können beispielsweise bei als binäre Schaltgeräte ausgebildeten optischen Sensoren 1 Schwellwerte vorgegeben werden, mittels derer die Empfangssignale bewertet werden.

Bei als Distanzsensoren ausgebildeten optischen Sensoren 1 kann beispielsweise der Distanzbereich der Objekterfassung als Parameterwert vorgegeben werden.

Figur 3a zeigt schematisch die Draufsicht auf ein erstes Ausführungsbeispiel eines Steckverbinders 11 für die optischen Sensoren 1 gemäß den Figuren 1 und 2. Die dort dargestellte Ausführungsform ist als 6-poliger M 12-Steckverbinder ausgebildet. Von den sechs Anschlußpins 11 a dienen zwei zur Zuführung von Versorgungsleitungen zum optischen Sensor 1. Mittels der Versorgungsleitungen wird die Versorgungsspannung für den optischen Sensor 1 bereitgestellt. Die Versorgungsspannung liegt typischerweise im Bereich zwischen 10 V und 30 V. Über die restlichen vier Anschlußpins 11a werden Datenleitungen zum optischen Sensor 1 geführt.

Diese vier Datenleitungen definieren die Ethernet-Schnittstelle.

Eine weitere Variante eines Steckverbinders 11 mit einer Ethernet-Schnittstelle ist in Figur 3b dargestellt. Auch dieser ist als M12-Steckverbinder ausgebildet. Jedoch ist dieser im Gegensatz zur Ausführungsform gemäß Figur 3a als 4-poliger Steckverbinder 11 ausgebildet. Wesentlich hierbei ist, dass die Spannungsversorgung des optischen Sensors 1 über die Ethernet-Schnittstelle erfolgt. Diese Konfiguration wird beispielsweise als "power over ethernet" oder als "active ethernet" bezeichnet.

Die vier Anschlusspins 11 a des Steckverbinders 11 gemäß Figur 3b dienen zur Zuführung von vier Datenleitungen zum optischen Sensor 1. Über diese Datenleitung erfolgt die Datenübertragung der Ethernet-Schnittstelle. Die Daten werden dabei typischerweise gleichspannungsfrei im Manchestercode übertragen.

Über die Datenleitungen erfolgt zugleich die Einspeisung der Versorgungsspannung in den optischen Sensor 1. Hierzu wird den die Manchestercodierungen enthaltenden Wechselspannungen eine Gleichspannung überlagert. Durch geeignete Isolationstransformer wird dann im optischen Sensor 1 die Gleichspannung von den Wechselspannungsanteilen wieder abgetrennt. Vorzugsweise werden zwei der vier Datenleitungen für die Einspeisung der Versorgungsspannung genutzt.

### Bezugszeichenliste

- (1): Optischer Sensor
- (2): Objekt
- (3): Sendelichtstrahlen
- (4): Sender
- (5): Empfangslichtstrahlen
- (6): Empfänger
- (7): Gehäuse
- (8a): Sendeoptik
- (8b): Empfangsoptik
- (9): Austrittsfenster
- (10): Auswerteeinheit
- (11): Steckverbinder
- (11a): Anschlußpins
- (12): Reflektor

## Patentansprüche

1. Optischer Sensor zur Erfassung von Objekten in einem Überwachungsbereich mit einem Sendelichtstrahlen emittierenden Sender, einem Empfangslichtstrahlen empfangenden Empfänger und einer Auswerteeinheit, in welcher die am Ausgang des Empfängers anstehenden Empfangssignale zur Generierung eines Objektfeststellungssignals ausgewertet werden, **dadurch gekennzeichnet, dass** die Auswerteeinheit (10) einen Ethernet-Controller aufweist, welcher an eine Ethernet-Schnittstelle angeschlossen ist.

2. Optischer Sensor nach Anspruch 1, **dadurch gekennzeichnet, dass** dieser als Anschlußmittel einen Steckverbinder (11) aufweist, in welchem die Ethernet-Schnittstelle integriert ist.

3. Optischer Sensor nach Anspruch 2, **dadurch gekennzeichnet, dass** der Steckverbinder (11) als M 12-Steckverbinder ausgebildet ist.

4. Optischer Sensor nach einem der Ansprüche 2 oder 3, **dadurch gekennzeichnet, dass** über den Steckverbinder (11) die Ethernet-Schnittstelle bildende Datenleitungen geführt sind.

5. Optischer Sensor nach einem der Ansprüche 2 - 4, **dadurch gekennzeichnet, dass** über den Steckverbinder (11) Versorgungsleitungen zur Spannungsversorgung geführt sind, welche Bestandteil der Ethernet-Schnittstelle sind.

6. Optischer Sensor nach einem der Ansprüche 2 - 5, **dadurch gekennzeichnet, dass** dieser einen 6-poligen Steckverbinder (11) zum Anschluß von zwei Versorgungsleitungen und vier Datenleitungen aufweist.

7. Optischer Sensor nach einem der Ansprüche 2 - 5, **dadurch gekennzeichnet, dass** dieser einen 4-poligen Steckverbinder (11) zum Anschluß von vier Datenleitungen aufweist, wobei zumindest über einen Teil der Datenleitungen die Versorgungsspannung in den optischen Sensor (1) eingespeist wird.

8. Optischer Sensor nach einem der Ansprüche 1-7, **dadurch gekennzeichnet, dass** dessen Sensorfunktionen über den Ethernet-Controller steuerbar sind.

9. Optischer Sensor nach einem der Ansprüche 1 - 8, **dadurch gekennzeichnet, dass** dieser über die Ethernet-Schnittstelle parametrierbar ist.

10. Optischer Sensor nach einem der Ansprüche 1 - 9, **dadurch gekennzeichnet, dass** über die Ethernet-Schnittstelle eine Sensordiagnose durchführbar ist.

11. Optischer Sensor nach einem der Ansprüche 9 oder 10, **dadurch gekennzeichnet, dass** dessen Parametrisierung und/oder Diagnose über eine externe Rechnereinheit oder Steuereinheit, welche über den Steckverbinder (11) anschließbar ist, durchgeführt wird.

12. Optischer Sensor nach einem der Ansprüche 2 - 11, **dadurch gekennzeichnet, dass** dieser in einem Gehäuse (7) integriert ist, wobei der Steckverbinder (11) in einer Wand des Gehäuses (7) gelagert ist.

13. Optischer Sensor nach einem der Ansprüche 4 - 12, **dadurch gekennzeichnet, dass** dessen Versorgungsspannung im Bereich zwischen 10 V und 30 V liegt.

14. Optischer Sensor nach einem der Ansprüche 1 - 13, **dadurch gekennzeichnet, dass** in der Auswerteeinheit (10) ein als binäres Schaltsignal ausgebildetes Objektfeststellungssignal generiert wird.

15. Optischer Sensor nach Anspruch 14, **dadurch gekennzeichnet, dass** dieser als Lichtschranke, Lichttaster oder Reflexionslichtschranke ausgebildet ist.

16. Optischer Sensor nach Anspruch 1-13, **dadurch gekennzeichnet, dass** in der Auswerteeinheit (10) ein analoges Objektfeststellungssignal generiert wird.

17. Optischer Sensor nach Anspruch 16, **dadurch gekennzeichnet, dass** dieser als Distanzsensor ausgebildet ist.
